(19) Europäisches Patentamt
European Patent Office
Office européen des brevets

(11) **EP 3 032 440 A1**

(12) **DEMANDE DE BREVET EUROPEEN**

(43) Date de publication:
**15.06.2016 Bulletin 2016/24**

(51) Int Cl.:
***G06F 17/30*** *(2006.01)*

(21) Numéro de dépôt: **15198507.4**

(22) Date de dépôt: **08.12.2015**

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**
Etats d'extension désignés:
**BA ME**
Etats de validation désignés:
**MA MD**

(30) Priorité: **11.12.2014 FR 1462262**

(71) Demandeur: **Orange**
**75015 Paris (FR)**

(72) Inventeurs:
• **DOISY, Nicolas**
**35000 Rennes (FR)**
• **CHAUVEL, Jérôme**
**22660 Trevou Treguignec (FR)**
• **VILLE EBER, Sandrine**
**35235 Thorigne-Fouillard (FR)**

(54) **PROCÉDÉ ET DISPOSITIF D'UTILISATION DE CONTENUS D'UNE BIBLIOTHÈQUE DE CONTENUS**

(57) L'invention concerne une utilisation d'une bibliothèque de contenus, en particulier le visionnage interactif des contenus de la bibliothèque.

Un objet de l'invention est un procédé d'utilisation de contenus d'une bibliothèque de contenus comportant, suite à une utilisation d'au moins un contenu d'une bibliothèque, une génération de plusieurs clusters de contenus à partir des contenus de la bibliothèque en fonction d'un ou plusieurs critères associés aux clusters, les critères ayant été déterminés en fonction d'au moins un contenu précédemment utilisé, les clusters générés étant sélectionnables par un utilisateur, une sélection d'un cluster déclenchant une utilisation des contenus du cluster sélectionné.

Ainsi, les groupements de contenus proposés ou clusters à l'utilisateur ont une plus forte probabilité d'être sélectionné par l'utilisateur que des dossiers de contenus classés par date ou thème puisqu'ils sont élaborés en tenant compte des contenus précédemment utilisés.

Fig. 1

EP 3 032 440 A1

**Description**

L'invention concerne une utilisation d'une bibliothèque de contenus, en particulier le visionnage interactif des contenus de la bibliothèque.

Aujourd'hui, lorsqu'un utilisateur veut visionner des photos et ou vidéos de sa bibliothèque, il se retrouve confronté au problème du nombre de contenus dans cette bibliothèque. En effet, la capture numérique de contenu et la facilité de stockage de ceux-ci a fait exploser le nombre de contenus disponibles dans les bibliothèques personnelles de contenus.

Du fait du nombre très élevé de contenus dans une bibliothèque, voire de contenus en doublon, le visionnage de la bibliothèque peut s'avérer ennuyeux car un grand nombre des contenus reproduit ne présentent pas d'intérêt pour l'utilisateur à l'instant du visionnage. Le visionnage de l'ensemble de contenus d'une bibliothèque étant donc sans intérêt pour l'utilisateur voire impossible, des moyens ont été élaborés pour aider l'utilisateur à retrouver voire à redécouvrir ses contenus.

Une solution proposée actuellement est alors de sélectionner une partie des contenus en fonction d'un ou plusieurs mots-clés avant leur reproduction. Or, le très grand nombre de contenu rend difficile aussi la sélection des contenus pour leur visionnage car il amène l'utilisateur à sélectionner un ou plusieurs mots-clés parmi un nombre important de mots-clés nécessaires à la description de ce grand nombre de contenus.

Une autre solution a été de ranger les contenus dans des dossiers soit par date de prise de vue, soit par thématique (album). Cette solution permet de visionner les contenus par nombre de contenus raisonnable pour un visionnage, c'est-à-dire pour que la durée du visionnage n'excède pas quelques minutes dans le cadre d'un visionnage personnel, voire 15-20 minutes dans le cas d'une projection à un groupe de personnes par exemple. L'utilisateur étant ainsi limité à un seul contexte, il exploite faiblement les contenus ainsi classés. Et, lorsque, néanmoins l'utilisateur veut utiliser les contenus ainsi rangés en dehors des thèmes préétablis, il se retrouve confronté au même problème de sélection que précédemment.

En outre, lorsque les contenus sont ainsi éparpillés dans différents dossiers, un utilisateur, n'étant plus intéressé à poursuivre le visionnage des contenus d'un dossier, devra effectuer une nouvelle sélection parmi le grand nombre de dossiers.

C'est pour ces raisons que l'utilisateur redécouvre généralement ses contenus selon un critère temporel (date de prise de vue, date de téléchargement...) ou par ordre alphanumérique de nom de contenu.

Un des buts de la présente invention est de remédier à des inconvénients de l'état de la technique.

Un objet de l'invention est un procédé d'utilisation de contenus d'une bibliothèque de contenus comportant, suite à une utilisation d'au moins un contenu d'une bibliothèque, une génération de plusieurs clusters de contenus à partir des contenus de la bibliothèque en fonction d'un ou plusieurs critères associés aux clusters, les critères ayant été déterminés en fonction d'au moins un contenu précédemment utilisé, les clusters générés étant sélectionnables par un utilisateur, une sélection d'un cluster déclenchant une utilisation des contenus du cluster sélectionné.

Ainsi, les groupements de contenus proposés ou clusters à l'utilisateur ont une plus forte probabilité d'être sélectionné par l'utilisateur que des dossiers de contenus classés par date ou thème puisqu'ils sont élaborés en tenant compte des contenus précédemment utilisés.

Avantageusement, le procédé d'utilisation de contenus comporte une sélection d'un cluster sur commande de l'utilisateur parmi les suivants :

- les clusters générés,
- un autre cluster lié au cluster en cours d'utilisation au moyen d'une passerelle entre un contenu du cluster en cours d'utilisation et un contenu de cet autre cluster.

Ainsi, l'utilisateur n'a pas à sélectionner un à un les contenus de l'ensemble qu'il souhaite voir utilisé parmi tous les contenus de la bibliothèque, ni un ou plusieurs mots-clés parmi un grand nombre de mots-clés décrivant l'ensemble des contenus de la bibliothèque.

L'utilisateur ne se trouve donc plus confronté à une difficulté de sélection puisque les contenus sont déjà regroupés en cluster de contenus (notamment en cluster thématique), et que le nombre de clusters reste gérable, appréhendable par l'utilisateur car celui-ci est réduit à des clusters en lien avec des contenus précédemment utilisés.

Avantageusement, le procédé d'utilisation de contenus comporte une utilisation d'un premier contenu sélectionné par l'utilisateur dans la bibliothèque, l'utilisation du premier contenu déclenchant la génération de clusters de contenus en fonction d'un ou plusieurs critères déterminés en fonction du premier contenu.

Ainsi, l'utilisateur peut indiquer simplement les contenus de la bibliothèque qu'il souhaite visionner, sans sélectionner un à un ces contenus, ni sélectionner plusieurs mots-clés, voire en ayant oublié certains de ces contenus.

Avantageusement, le procédé d'utilisation de contenus comporte une utilisation des contenus d'un cluster sélectionné déclenchée par la sélection dudit cluster sur commande de l'utilisateur.

Ainsi, le visionnage des contenus de la bibliothèque est interactif.

Avantageusement, le procédé d'utilisation de contenus comporte une utilisation des contenus d'un deuxième cluster sélectionné par l'utilisateur, la génération de deuxième clusters de contenus en fonction d'un ou plusieurs critères déterminés en fonction d'au moins un contenu du premier cluster étant déclenchée par l'un des événements suivants :

- l'utilisation du dernier contenu d'un premier cluster,
- une requête de sortie de cluster de l'utilisateur.

Ainsi, le visionnage des contenus de la bibliothèque est interactif et évolutif.

Avantageusement, les critères sont déterminés en fonction d'au moins une information parmi les suivantes :

- des informations relatives au premier contenu,
- des informations relatives à des contenus d'un cluster précédemment utilisés,
- des informations relatives à au moins une action de l'utilisateur relativement à au moins un contenu d'au moins un cluster précédemment utilisé,
- des informations relatives à au moins une commande de sélection de cluster de l'utilisateur.

En déterminant les critères en fonction d'informations relatives au premier contenu, cela permet à l'utilisateur d'orienter, de manière simplifiée, l'utilisation de la bibliothèque.

En déterminant les critères en fonction d'informations relatives à des contenus d'un cluster précédemment utilisés, cela permet de faire évoluer l'utilisation de la bibliothèque.

En déterminant les critères en fonction d'action de l'utilisateur relativement à au moins un contenu utilisé, cela permet à l'utilisateur d'interagir de manière simplifié avec l'utilisation de la bibliothèque.

En déterminant les critères en fonction de la sélection d'un cluster de contenus par un utilisateur, cela permet qu'une interaction de l'utilisateur avec l'utilisation de la bibliothèque serve à plusieurs évolutions de l'utilisation de la bibliothèque : tout d'abord, l'utilisation du cluster de contenus sélectionnés puis la génération de nouveaux clusters dont au moins un sera utilisé.

La combinaison d'au moins deux de ces informations, permet la génération de cluster plus pertinent en termes d'intérêt d'utilisation pour l'utilisateur.

Avantageusement, les critères sont déterminés en fonction d'informations relatives à au moins une utilisation de contenus de la bibliothèque parmi les utilisations suivantes :

- une utilisation en cours,
- au moins une précédente utilisation, les critères étant fonction de données sauvegardées lors de la précédente utilisation.

Ainsi, l'utilisation de la bibliothèque évolue en fonction de l'intérêt d'utilisation actuel de l'utilisateur et/ou l'intérêt d'utilisation général de l'utilisateur.

Avantageusement, le procédé d'utilisation de contenus comporte une sauvegarde de données, les données sauvegardées comportant au moins une partie des informations relatives à des contenus utilisés, des critères, à des commandes de sélection de l'utilisation, et à des actions de l'utilisateur durant l'utilisation.

Ainsi, les informations servant à la détermination de critères de l'utilisation permettront de générer des clusters dans une future utilisation.

Avantageusement, le procédé d'utilisation comporte une détection de lien entre des caractéristiques de contenu de deux clusters, la détection d'un lien déclenchant une création d'une passerelle entre ces contenus de ces deux clusters.

Ainsi, l'utilisation des contenus permettra de passer d'un cluster de contenus à un autre sans nouvelle génération de cluster. Les passerelles entrent clusters favoriseront l'utilisation de l'ensemble des clusters générés.

Avantageusement, la détection de lien est effectuée lors de la génération de clusters.

Ainsi, la charge de traitement est réduite puisque la détection de lien utilise une analyse des critères permettant la génération des clusters.

Avantageusement, le procédé d'utilisation comporte une création de passerelle entre clusters, une passerelle étant établie entre un contenu d'un cluster et un contenu d'un autre cluster dès qu'un lien entre des caractéristiques du contenu du cluster et des caractéristiques du contenu de l'autre cluster sont détecté.

Avantageusement, le procédé d'utilisation comporte une utilisation d'un contenu associé à une passerelle entre le contenu d'un cluster et un contenu d'un autre cluster déclenchant une proposition de sélection de l'autre cluster, la sélection de l'autre cluster permettant de déclencher une utilisation des contenus de cet autre cluster commençant par le contenu associé à la passerelle dans cet autre cluster.

Avantageusement, selon une implémentation de l'invention, les différentes étapes du procédé selon l'invention sont mises en oeuvre par un logiciel ou programme d'ordinateur, ce logiciel comprenant des instructions logicielles destinées à être exécutées par un processeur de données d'un dispositif d'utilisation de contenus et étant conçus pour commander l'exécution des différentes étapes de ce procédé.

L'invention vise donc aussi un programme comprenant des instructions de code de programme pour l'exécution des étapes du procédé d'utilisation de contenus lorsque ledit programme est exécuté par un processeur.

Ce programme peut utiliser n'importe quel langage de programmation et être sous la forme de code source, code objet ou code intermédiaire entre code source et code objet tel que dans une forme partiellement compilée ou dans n'importe quelle autre forme souhaitable.

Un objet de l'invention est également un dispositif d'utilisation de contenus d'une bibliothèque de contenus comportant un générateur de clusters, le générateur fournissant, suite à une utilisation d'au moins un contenu d'une bibliothèque, plusieurs clusters de contenus à partir des contenus de la bibliothèque en fonction d'un ou plusieurs critères associés aux clusters, les critères ayant été déterminés en fonction d'au moins un contenu précédemment utilisé, les clusters générés étant sélectionnables par un utilisateur, une sélection d'un cluster déclenchant une utilisation des contenus du cluster sélectionné.

Un objet de l'invention est également un terminal comportant :

- Un module d'utilisation de contenus

- Un générateur de clusters fournissant, suite à une utilisation d'au moins un contenu d'une bibliothèque de contenus, plusieurs clusters de contenus à partir des contenus de la bibliothèque en fonction d'un ou plusieurs critères associés aux clusters, les critères ayant été déterminés en fonction d'au moins un contenu précédemment utilisé par le module d'utilisation, les clusters générés étant sélectionnables par un utilisateur, une sélection d'un cluster déclenchant une utilisation des contenus du cluster sélectionné.

Les caractéristiques et avantages de l'invention apparaîtront plus clairement à la lecture de la description, faite à titre d'exemple, et des figures s'y rapportant qui représentent :

- Figure 1, un schéma simplifié d'un procédé d'utilisation de contenus d'une bibliothèque selon l'invention,
- Figure 2, un schéma séquentiel de l'utilisation dynamique d'une bibliothèque de contenu, selon l'invention,
- Figure 3a et 3b, des schémas simplifiés respectivement des liens entre les caractéristiques des contenus, et des clusters de contenus, selon l'invention,
- Figure 4, un schéma conceptuel de la dépendance entre le parcours d'utilisation d'une bibliothèque de contenu et des critères évolutifs, selon l'invention,
- Figure 5, un schéma simplifié d'un dispositif d'utilisation de contenus d'une bibliothèque selon l'invention.

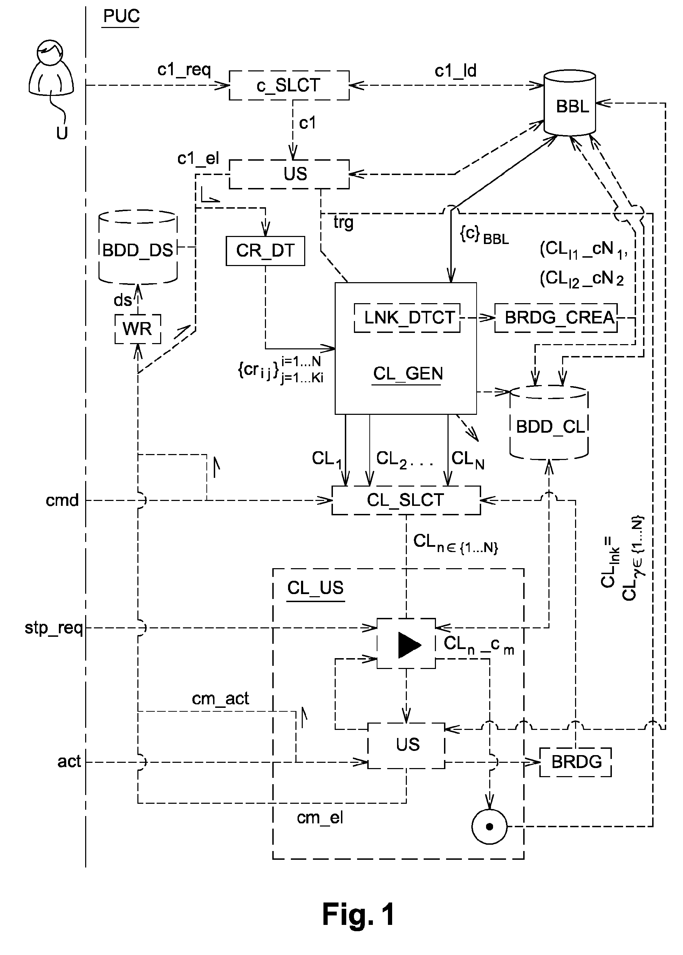

La figure 1 illustre un schéma simplifié d'un procédé d'utilisation de contenus d'une bibliothèque de contenus selon l'invention.

Le procédé d'utilisation de contenus PUC d'une bibliothèque de contenus BBL comporte, suite à une utilisation US d'au moins un premier contenu c1, cm d'une bibliothèque BBL, une génération CL_GEN de plusieurs clusters de contenus $CL_1$, $CL_2$...$CL_N$ à partir des contenus de la bibliothèque BBL en fonction d'un ou plusieurs critères associés aux clusters $\{cr_{ij}\}_{\substack{i=1..N \\ j=1..K_i}}$. Les critères $cr_{ij}$ ont été déterminés CR_DT en fonction d'au moins un premier contenu c1, cm précédemment utilisé. Les clusters générés $CL_1$...$CL_N$ sont sélectionnables CL_SLCT par un utilisateur U. Une sélection d'un cluster CL_SLCT déclenche une utilisation US des contenus du cluster sélectionné $CL_n$.

En particulier, le procédé d'utilisation de contenus PUC comporte une sélection d'un contenu c_SLCT par un utilisateur U. L'utilisateur U envoie, par exemple au moyen d'une interface utilisateur (non illustré sur la figure 1), une requête d'un contenu c1 parmi les contenus de la bibliothèque de contenus. Le procédé d'utilisation PUC sélectionne c_SLCT alors ce premier contenu c1 dans la bibliothèque BBL pour l'utiliser US, notamment en chargeant c1_Id le contenu.

En particulier, lors du démarrage de l'utilisation de la bibliothèque, ce contenu sélectionné est le premier contenu utilisé. Le procédé d'utilisation de contenus PUC comporte, donc, une utilisation US d'un premier contenu c1 sélectionné par l'utilisateur U dans la bibliothèque BBL. L'utilisation US du premier contenu c1 déclenche la génération de clusters de contenus CL_GEN en fonction d'un ou plusieurs critères déterminés en fonction du premier contenu c1. Cette étape est aussi appelé l'amorce, car elle démarre l'utilisation de la bibliothèque.

Ainsi, l'utilisateur peut indiquer simplement les contenus de la bibliothèque qu'il souhaite visionner, sans sélectionner un à un ces contenus, ni sélectionner plusieurs mots-clés, voire en ayant oublié certains de ces contenus.

En particulier, le procédé d'utilisation PUC comporte l'utilisation US de ce contenu c1 sélectionné c_SLCT par l'utilisateur U. L'utilisation US du premier contenu c1 sélectionné c_SLCT par l'utilisateur U déclenche trg une génération CL_GEN de cluster de contenus $CL_1$... $CL_N$, en fonction de critères associés aux clusters déterminés à partir de ce premier contenu c1 sélectionné par l'utilisateur.

En particulier, le procédé d'utilisation PUC comporte la détermination CR_DT des critères $\{cr_{ij}\}_{\substack{i=1..N \\ j=1..K_i}}$ en fonction du premier contenu c1 sélectionné c_SLCT par l'utilisateur U.

En particulier, le procédé d'utilisation PUC comporte une sélection CL_SLCT par l'utilisateur U d'un cluster ainsi généré en fonction du premier contenu c1 en cours d'utilisation. La sélection de cluster CL_SLCT est notamment déclenchée par l'utilisateur U au moyen d'une commande cmd. La commande cmd comporte par exemple un identifiant du cluster choisi par l'utilisateur U.

En particulier, le procédé d'utilisation PUC comporte une utilisation CL_US du cluster de contenu sélectionné CLn. L'utilisation d'un cluster de contenu CL_US comporte, notamment, une lecture ▶ successive ou simultanée des contenus $CL_n\_c_1$... $CL_n\_c_M$ du cluster sélectionné $CL_n$ et l'utilisation US du contenu lu $CL_n\_c_m$.

En particulier, le procédé d'utilisation PUC de contenus comporte, donc, une utilisation des contenus d'un cluster sélectionné US déclenché par la sélection dudit cluster CL_SLCT sur commande cmd de l'utilisateur U. Lorsque l'utilisation des contenus du cluster est une reproduction de ces contenus, cette étape est aussi appelée visualisation.

L'utilisation d'un contenu est notamment sa reproduction sur un écran, son intégration dans un contenu multimédia complexe : tels qu'un livre, un album, un calendrier, un film... par un outil de traitement de contenu.

Ainsi, l'utilisation, en particulier le visionnage, des contenus de la bibliothèque est interactif.

En particulier, la lecture ▶ du dernier contenu d'un cluster $CL_n\_c_M$ entraine l'utilisation US de ce dernier contenu d'un cluster $CL_n\_c_M$ et la fin d'utilisation ⊙ du cluster $CL_n$ en cours d'utilisation.

En particulier, l'utilisation d'un cluster CL_US peut être arrêtée par l'utilisateur U au moyen notamment d'une requête de fin d'utilisation d'un cluster stp_req. Par exemple, la requête de fin stp_req est reçue par la lecture successive de contenus▶. Au lieu de lire le contenu suivant du cluster en cours d'utilisation $CL_n$, la réception de la requête de fin stp_req déclenche la fin d'utilisation ⊙ du cluster $CL_n$ en cours d'utilisation.

En particulier, la fin d'utilisation d'un cluster ⊙ déclenche trg la génération de nouveaux clusters de contenus CL_GEN en fonction notamment des contenus du cluster $CL_n$ précédemment utilisé.

En particulier, la détermination CR_DT des critères $\left\{cr_{ij}\right\}_{\substack{i=1..N \\ j=1..K_i}}$ est fonction d'au moins un des contenus du cluster dont l'utilisation vient de se terminer $\{CL_n\_c_m\}_{1\leq m\leq M}$.

En particulier, le procédé d'utilisation PUC comporte une sélection CL_SLCT par l'utilisateur U d'un cluster ainsi généré en fonction de contenu du cluster dont l'utilisation vient de se terminer.

En particulier, le procédé d'utilisation de contenus PUC comporte une utilisation CL_US des contenus d'un deuxième cluster sélectionné CL_SLCT par l'utilisateur U. La génération de deuxième clusters de contenus CL_GEN est fonction de critère déterminé en fonction d'au moins un contenu du premier cluster étant déclenchée par l'un des événements suivants :

- l'utilisation du dernier contenu d'un premier cluster,
- une requête de sortie de cluster de l'utilisateur stp_req.

Ainsi, l'utilisation des contenus de la bibliothèque est interactive et évolutif.

En particulier, la détermination CR_DT des critères $\left\{cr_{ij}\right\}_{\substack{i=1..N \\ j=1..K_i}}$ est fonction de la commande cmd de sélection du cluster $CL_n$. Ainsi, la sélection d'un premier cluster parmi plusieurs premiers clusters générés sera prise en compte lors de la génération ultérieure de clusters ou génération de deuxièmes clusters. Par exemple, les nouveaux critères seront fonction des critères associés au premier cluster sélectionné, ou fonction critères associés au premier cluster sélectionné auxquels auront été retirés les critères communs avec les autres premiers clusters.

En particulier, la détermination CR_DT des critères $\left\{cr_{ij}\right\}_{\substack{i=1..N \\ j=1..K_i}}$ est fonction d'au moins une action de l'utilisateur relativement à au moins un contenu du cluster dont l'utilisation vient de se terminer.

Par exemple, une action de pause sur un contenu du cluster engendrera le fait que les critères soient fonction d'informations relatives à ce contenu, et une action d'avance rapide sur un contenu du cluster engendrera le fait que les critères ne soient pas fonction d'informations relatives à ce contenu. De manière générale, un poids est affecté à un contenu en fonction d'une action sur le contenu et les critères sont déterminés en fonction des informations relatives aux contenus d'un cluster factorisées par le poids affecté aux contenus correspondants.

En particulier, les critères sont déterminés en fonction d'au moins une information parmi les suivantes :

- des informations $c_1\_el$ relatives au premier contenu,
- des informations $c_m\_el$ relatives à des contenus d'un cluster précédemment utilisés,
- des informations $c_m\_act$ relatives à au moins une action act de l'utilisateur U relativement à au moins un contenu d'au moins un cluster précédemment utilisé,
- des informations relatives à au moins une commande cmd de sélection de cluster de l'utilisateur U.

En particulier, le procédé d'utilisation PUC comporte une sauvegarde WR de tout ou partie des informations d'un cluster permettant de déterminer des critères de génération de cluster, notamment lors de la fin d'utilisation du cluster⊙. Ces données ds sont notamment sauvegardées dans une base de données de sauvegarde.

En particulier, le procédé d'utilisation de contenus PUC comporte une sauvegarde WR de données ds. Les données sauvegardées ds comporte au moins une partie des informations relatives à des contenus utilisés $c_1$, $c_m$, des critères $cr_{ij}$, à des commandes cmd de sélection de l'utilisation, et à des actions act de l'utilisateur U durant l'utilisation.

Ainsi, les informations servant à la détermination de critères de l'utilisation permettront de générer des clusters dans une future utilisation.

Ainsi les informations relatives à l'utilisation d'un premier cluster peuvent être utilisée lors de la génération CL_GEN de deuxièmes clusters (c'est-à-dire de clusters dont au moins un pourra être utilisé directement après l'utilisation du premier cluster), mais aussi lors de la génération CL_GEN de clusters ultérieurs : troisièmes, quatrièmes... clusters (c'est-à-dire de clusters dont au moins un pourra être utilisé directement ou non après l'utilisation d'un deuxième cluster suivant l'utilisation du premier cluster).

La sauvegarde des données permet aussi de tenir compte dans une utilisation des contenus PUC d'une précédente utilisation de ces contenus par l'utilisateur U. Ainsi, un utilisateur U, qui a utilisé la bibliothèque de contenus BBL une première fois au moyen du procédé d'utilisation PUC selon l'invention, se verra proposé par le procédé d'utilisation PUC, lors d'une deuxième utilisation de la bibliothèque de contenus BBL, des clusters générés non seulement en fonction d'un contenu sélectionné par l'utilisation lors du démarrage de cette deuxième utilisation mais aussi en fonction des contenus précédemment utilisées lors de la première utilisation.

En particulier, les critères sont déterminés en fonction d'informations relatives à au moins une utilisation de contenus de la bibliothèque parmi les utilisations suivantes :

- une utilisation en cours,
- au moins une précédente utilisation, les critères étant fonction de données sauvegardées lors de la précédente utilisation.

Ainsi, l'utilisation de la bibliothèque évolue en fonction de l'intérêt d'utilisation actuel de l'utilisateur et/ou l'intérêt d'utilisation général de l'utilisateur.

En particulier, les critères sont déterminés en fonction d'informations relatives à au moins une précédente utilisation de contenus de la bibliothèque par un groupe d'utilisateurs prédéfini.

Ainsi, les clusters proposés à un utilisateur sont fonction de contenus visualisés, par exemple, par d'autres utilisateurs du procédé d'utilisation selon l'invention soit pris individuellement soit en communauté, notamment d'amis de l'utilisateur, par exemple d'une communauté d'amis dans un réseau social, ou d'amis d'un carnet d'adresse ou d'un groupe d'amis se partageant la bibliothèque de contenus.

En particulier, le procédé d'utilisation PUC comporte une utilisation US d'un contenu associé à une passerelle entre le contenu d'un cluster et un contenu d'un autre cluster ($CL_{l1\_}c_{\mu 1}$, $CL_{l2\_}c_{\mu 2}$) déclenchant une proposition de sélection de l'autre cluster BRDG. La sélection CL_SLCT de l'autre cluster $CL_{lnk}$ permet de déclencher une utilisation US des contenus de cet autre cluster $CL_{lnk}$ en commençant par le contenu associé à la passerelle dans cet autre cluster.

En particulier, le procédé d'utilisation PUC comporte une passerelle BRDG déclenchée par l'utilisation d'un contenu d'un cluster lié avec un contenu d'un autre cluster.

Notamment, la passerelle BRDG fournit le cluster $CL_{lnk}$ lié au cluster en cours d'utilisation à la sélection de cluster CL_SCT permettant à l'utilisateur U de commander cmd l'utilisation du cluster lié $CL_{lnk}$, en particulier à partir du contenu lié au contenu en cours d'utilisation.

Ainsi, l'utilisateur se voit proposer de naviguer entre les différents clusters générés permettant ainsi une utilisation de l'ensemble de ces clusters et non d'un seul.

Par exemple, dans le cas d'une reproduction d'un cluster photo « Match de football » d'un utilisateur Tom comportant une photo de son ami Bob, lors de la reproduction de cette photo de son ami Bob, le procédé d'utilisation pourrait proposer à Tom de sélectionner un cluster lié à cette photo, par exemple un cluster « Soirée grillade » qui correspond à un évènement qui s'est déroulé chez cet ami Bob. La passerelle entre ces deux clusters est basée sur cet « ami Bob ».

En particulier, le procédé d'utilisation PUC comporte une détection de lien LNK_DTCT entre des caractéristiques de contenus de deux clusters ($CL_{l1}$, $CL_{l2}$).

La génération de cluster CL_GEN comporte, notamment, une détection de lien LNK_DTCT entre deux contenus de clusters distincts ($CL_{l1\_}c_{\mu 1}$, $CL_{l2\_}c_{\mu 2}$). Ainsi, l'utilisation d'un de ces deux contenus (si l'un de ces deux clusters a été sélectionné CL_SLCT déclenche une passerelle BRDG vers l'autre cluster $CL_{lnk}$.

Ainsi, la charge de traitement est réduite puisque la détection de lien utilise une analyse des critères permettant la génération des clusters.

En particulier, le procédé d'utilisation PUC comporte une création de passerelle BRDG_CREA recevant le lien détecté ($CL_{l1\_}c_{\mu 1}$, $CL_{l2\_}c_{\mu 2}$) et associant ce lien aux deux contenus liés soit dans une base de données de clusters BDD_CL, soit dans la bibliothèque de contenus BBL, soit dans une base de données de lien (non illustrés), soit directement à l'utilisation de cluster CL_US lorsque l'un des clusters liés est sélectionné CL_SLCT.

Notamment, le procédé d'utilisation PUC comporte une création de passerelle entre clusters BRDG_CREA.. Une passerelle est, par exemple, établie entre un contenu $c_{\mu 1}$ d'un cluster $CL_{l1}$ et un contenu $c_{\mu 2}$ d'un autre cluster $CL_{l2}$ dès qu'un lien entre des caractéristique du contenu du cluster et des caractéristiques du contenu de l'autre cluster est détecté.

Notamment, la détection d'un lien LNK_DTCT déclenche une création d'une passerelle BRDG_CREA entre ces contenus de ces deux clusters($CL_{l1\_}c_{\mu 1}$, $CL_{l2\_}c_{\mu 2}$).

Ainsi, l'utilisation des contenus permettra de passer d'un cluster de contenus à un autre sans nouvelle génération de cluster. Les passerelles entre clusters favoriseront l'utilisation de l'ensemble des clusters générés.

En particulier, la génération de cluster CL_GEN se base sur les liens entre contenus pour générer les clusters.

Les clusters sont notamment enregistrer dans une base de données de cluster BDD_CL, par exemple jusqu'à la génération de clusters suivante.

En particulier, le procédé d'utilisation de contenus PUC comporte, donc, une sélection d'un cluster CL_SLCT sur commande cmd de l'utilisateur U parmi les suivants :

- les clusters générés $CL_1...CL_N$,
- un autre cluster lié $CLI_{nk}$ au cluster en cours d'utilisation au moyen d'une passerelle entre un contenu du cluster en cours d'utilisation et un contenu de cet autre cluster.

Un mode de réalisation du procédé d'utilisation de contenu PUC est un programme comprenant des instructions de code de programme pour l'exécution des étapes du procédé d'utilisation de contenus lorsque ledit programme est exécuté par un processeur.

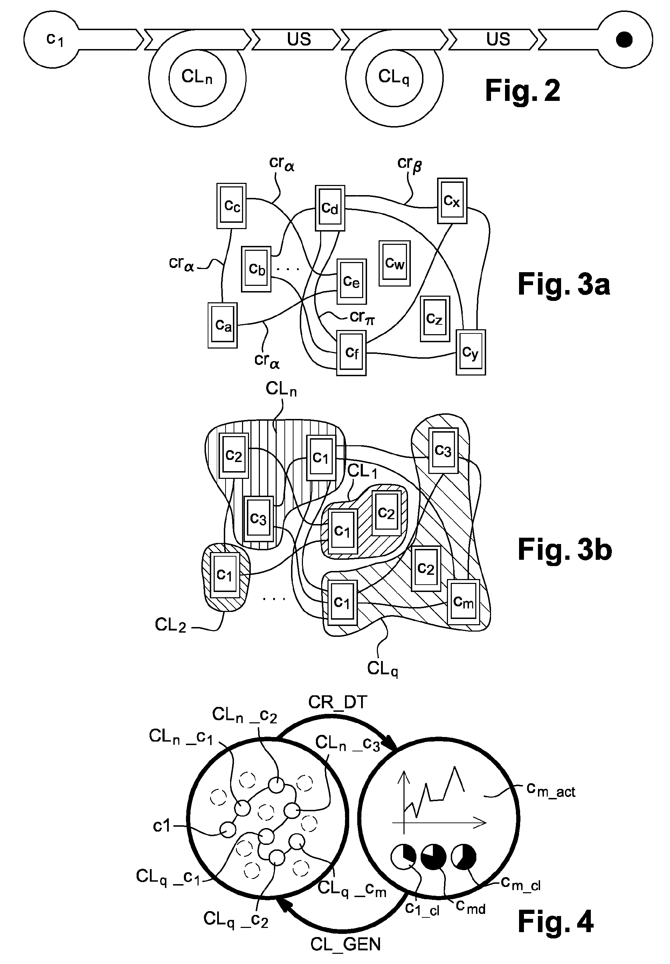

Le procédé d'utilisation PUC de contenus d'une bibliothèque selon l'invention peut aussi être illustré par le schéma séquentiel de la figure 2. L'utilisation de la bibliothèque est dynamique car elle propose à l'utilisateur de parcourir la bibliothèque de contenus dans des clusters proposés qu'il choisit de consulter ou non. Ces clusters peuvent être proposés à intervalles réguliers ou non, c'est-à-dire à la fin d'une période de temps prédéfinie, à la fin de l'utilisation d'un cluster (tous les clusters étant de tailles identiques ou non, en termes de nombre de contenus et/ou de durée d'utilisation), à la lecture d'un contenu lié par une passerelle à un autre cluster...

Les contenus de la bibliothèque sont, en particulier, étiquetés partiellement ou intégralement, d'informations complémentaires telles que :

- des caractéristiques de contexte (lieu, date, heure, point d'intérêt...)
- caractéristiques de capture (luminosité, exposition, orientation...)
- format de restitution (dimensions, compression, poids...)
- caractéristiques de sujet obtenues notamment au moyen d'une analyse intra-contenu (typologie de photos, personnes présentes, textes, concepts associés...)
- appartenance (détenteur du périphérique, auteur et/ou possesseur du contenu...)

L'utilisation peut être décomposée en quatre phases distinctes :

1°) l'amorçage qui consiste à sélectionner c_SLCT un premier contenu c1, ou contenu initial, dont les caractéristiques singulières vont être lues, analysées puis comparées CR_DT au reste de la bibliothèque de l'utilisateur ;

2°) la clarification qui consiste à proposer les différents clusters générés CL_GEN en lien avec le contenu initial c1 et ou le cluster précédemment utilisé $CL_n$, et à sélectionner l'un d'entre eux, respectivement $CL_n$ et CLq;

3°) l'utilisation US qui consiste à utiliser, notamment à afficher, successivement ou simultanément les contenus du cluster sélectionné ;

4°) l'interruption ⊙ qui consiste à mettre un terme à la séquence d'utilisation.

La figure 2 montre que les phases 2 de clarification et 3 d'utilisation peuvent être répétées jusqu'à l'interruption.

Par exemple, dans le cas d'une utilisation pour le visionnage d'une bibliothèque de photos:

**1 °) Amorçage :**

Un utilisateur Simon initie le procédé d'utilisation PUC en sélectionnant une première photo c1 : une photo de lui en vacances à <Barcelone> avec ses amis <Paul>, <Noah> et <Kate> prise à <21:23> le <11/08/2014> alors qu'ils jouent au <ballon> sur la <plage> <orientée Ouest> et capturée en <1/500 f5.6 500 iso>

Les caractéristiques associées à cette photo c1 sont les suivantes :

- <Barcelone> qui est issue des données GPS
- <Paul> <Noah> <Kate> qui ont été déterminées par une analyse intra-contenu basée sur la reconnaissance de visage
- <21:23> qui est issue des données de contexte créés à la capture
- <11/08/2014> qui est issue des données de contexte créés à la capture
- <ballon> qui a été déterminée par une analyse intra-contenu basé sur l'analyse de concepts
- <plage> qui a été déterminée par une analyse intra-contenu basée sur l'analyse de typologie de photo
- <orientée Ouest> qui est issue des données de contexte créés à la capture
- <1/500 f5.6 500 iso> qui est issue des données de contexte créés à la capture

**2°) Clarification**

Le procédé d'utilisation PUC génère CL_GEN alors 3 clusters :

- le 1$^{er}$ cluster a pour caractéristiques principales $cr_{ij}$= <lieu commun> + <personnes communes> + <temporalité commune>. Simon y retrouve donc toutes les photos de ces mêmes vacances à Barcelone et ses alentours où soit Paul, soit Noah, soit Kate sont présents.

- Le 2$^{nd}$ s'organise autour des caractéristiques $cr_{ij}$= <concepts> + <plage>. Simon y retrouve toutes les photos où il a pu jouer au ballon (de football, de rugby, etc.) sur la plage (à Barcelone, à Saint Malo, à Noirmoutier ou ailleurs).

- Le 3$^{ème}$ regroupe les contenus en lien avec $cr_{ij}$= <paramétraaes de capture> et <heure>. Simon y redécouvre les photos où a été capturé un mouvement rapide (sport, dance, véhicule, etc.) au même moment de la journée (soirée).

Simon a décidé de cliquer CL_SLCT sur le 2$^{nd}$ cluster CL$_n$.

### 3°) Visualisation

Simon accède alors au cluster CL$_n$ en question et visualise US les contenus qui en ont les caractéristiques, c'est-à-dire les contenus regroupés par ce cluster, par exemple sous la forme d'un diaporama des contenus du cluster sélectionné.

Le défilement automatique peut être ralenti à sa demande. L'ensemble de ses actions permet de mesurer qu'il s'arrête majoritairement sur les photos où <lui-même> est présent alors qu'il joue au <football>. Cela permet de conditionner les clusters suivants en fonction de ces caractéristiques.

Ainsi, les clusters proposés à venir peuvent potentiellement être du type :

- Tous les contenus où Simon joue avec un ballon.
- Tous les contenus où Simon est au coeur d'une action
- Tous les contenus contenant une action avec un ballon
- Etc.

### 4°) Interruption ☉

Simon achève son diaporama. Une partie des informations de cette session est sauvegardée comme venant alimenter des habitudes d'usage pour améliorer de prochains visionnages.

Les figures 3a et 3b illustrent des schémas simplifiés respectivement des liens entre les caractéristiques des contenus, et des clusters de contenus, selon l'invention

Le procédé d'utilisation PUC comporte notamment dans un premier temps un indexage des contenus de la bibliothèque BBL. La bibliothèque est soit co-localisée, soit éparpillée (sur différents périphérique et/ou dans le cloud et/ou dans toute(s) autre(s) solution(s) de stockage...). Puis, le procédé d'utilisation comporte une analyse apte notamment à faire concorder les caractéristiques similaires de contenus de la bibliothèque (par exemple, toutes les photos prisent à telle heure et/ou à telle date et/ou dans tels régions géographiques... sont potentiellement issues du même contexte de prise de vue...). Cette analyse permet aussi notamment des rapprochements intra-contenus (détection de personnes présentes, de luminosité, de paysage... par exemple). Cette analyse est en particulier une détection de lien.

Le procédé d'utilisation PUC détient alors avec cet ensemble de liens une cartographie virtuelle illustrée par la figure 3a des interconnections existantes sur l'ensemble de la bibliothèque. Ce sont autant de passerelles entre les contenus. Ces liens sont plus ou moins logiques et conditionnées par le contexte d'usage, par exemple deux photos partageant la même caractéristique d'exposition <exposition longue> qui peut faire sens à un passionné d'astronomie réalisant des clichés du ciel.

La figure 3a montre une bibliothèque comportant plusieurs contenus $c_a...c_z$ dont certains sont liés entre eux par des critères $cr\alpha... cr\pi$. Par exemple, les contenus $c_a$, $c_c$ et $C_e$ sont liés entre eux par un critère $cr\alpha$; les contenus $c_d$, $c_f$, $c_x$ et $c_y$ sont liés entre eux par un critère $cr\beta$...; les contenus $c_b$, $c_d$ et $c_f$ sont liés entre eux par un critère $cr\pi$.

Sur le maillage de la figure 3a, le procédé d'utilisation PUC applique des règles pour générer des clusters pertinents CL_GEN montrés par la figure 3b : CL1, CL2..CLn...CLq.

L'utilisateur U parcours le contenu d'un cluster CL_US et peu s'il le souhaite emprunter l'une des passerelles BRDG vers un autre cluster.

Par exemple, l'utilisateur sélectionne d'abord le cluster CL$_n$, utilise les contenus $c_1$, puis $c_2$ de ce cluster CL$_n$. Là, le procédé d'utilisation PUC lui propose d'emprunter la passerelle vers le cluster CL$_1$, ou la passerelle vers le cluster CL$_2$.Si l'utilisateur choisit le cluster CL$_1$, il y utilisera d'abord le contenu c1 de ce cluster CL$_1$...

La figure 4 illustre un schéma conceptuel de la dépendance entre le parcours d'utilisation d'une bibliothèque de contenu et des critères évolutifs, selon l'invention.

Le concept de l'invention repose sur une construction active de l'utilisation des contenus via des liens entre les contenus conditionnés par des choix de l'utilisateur (critères déterminés en fonction des contenus utilisés, des actions de l'utilisateur sur ces contenus utilisés...)

En parallèle de cette appréhension non linéaire de la bibliothèque de contenu, le parcours de l'utilisateur dans la bibliothèque (illustré dans le cercle de gauche) est tenu à jour à travers d'une série d'indicateurs (illustrés dans le cercle de droite) évolutifs influençant les actions à sa disposition (CL_SLCT) et témoignant de son parcours.

Le parcours dans la bibliothèque de contenu ($c_1$, CL$_n$_$c_1$, CL$_n$_$c_2$, CL$_n$_$c_3$, CL$_q$_$c_1$, CL$_q$_$c_2$ ... CL$_q$_$c_m$) est donc modifiable en cours d'utilisation, il génère CR_DT des indicateurs ou critères (données issues des choix de l'utilisateur : $c_m$_act, $c_m$_el, cmd, $c_1$_el) et ces indicateurs influent sur le parcours (notamment sur les clusters générés CL_GEN dont l'une sera sélectionné par l'utilisateur U).

Ainsi, le procédé d'utilisation d'une bibliothèque de contenu selon l'invention permet à l'utilisateur de naviguer dans ses contenus ($c_1$, CL$_n$_$c_1$, CL$_n$_$c_2$, CL$_n$_$c_3$, CL$_q$_$c_1$, CL$_q$_$c_2$ ... CL$_q$_$c_m$) à la manière d'une histoire dont il est le héros. Chaque thématique (cluster de contenu : CLn, CLq) d'utilisation de contenu est intercalée avec une prise de décision de l'utilisateur quant à la piste thématique qu'il pend parti de suivre.

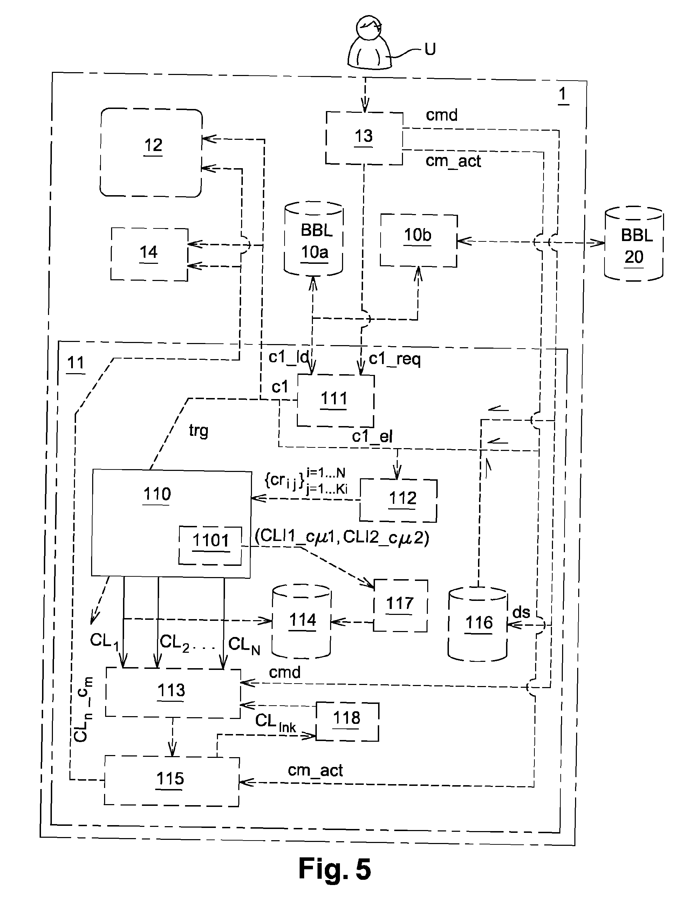

La figure 5 illustre un schéma simplifié d'un dispositif d'utilisation de contenu d'une bibliothèque selon l'invention.

Le dispositif d'utilisation de contenus 11 d'une bibliothèque de contenus comporte un générateur de clusters110. Le générateur 110 fourni, suite à une utilisation d'au moins un contenu d'une bibliothèque, plusieurs clusters de contenus à partir des contenus de la bibliothèque en fonction d'un ou plusieurs critères associés aux clusters, les critères ayant été déterminés en fonction d'au moins un contenu précédemment utilisé, les clusters générés étant sélectionnables par un utilisateur, une sélection d'un cluster déclenchant une utilisation des contenus du cluster sélectionné.

Eventuellement, un terminal 1 comporte :

- Un module d'utilisation de contenus (12, 14), et
- Un générateur de clusters 110 fournissant, suite à une utilisation d'au moins un contenu d'une bibliothèque de contenus, plusieurs clusters de contenus à partir des contenus de la bibliothèque en fonction d'un ou plusieurs critères associés aux clusters, les critères ayant été déterminés en fonction d'au moins un contenu précédemment utilisé par le module d'utilisation, les clusters générés étant sélectionnables par un utilisateur, une sélection d'un cluster déclenchant une utilisation des contenus du cluster sélectionné.

Par exemple, le terminal 1 comporte le dispositif d'utilisation de contenus 11 comportant le générateur de cluster 110.

En particulier, le dispositif d'utilisation 11 et/ou le terminal 1 comporte un sélecteur de contenus 111 dans une bibliothèque de contenu 10a, 20. Notamment, le sélecteur 111 reçoit une requête de contenu c1_req de l'utilisateur U au moyen d'une interface utilisateur 13. Le terminal 1 comporte éventuellement l'interface utilisateur 13.

En particulier, la bibliothèque de contenu BBL est comprise dans le terminal 1 : bibliothèque 10a, et/ou directement dans le dispositif d'utilisation 11 (non illustré), et/ou est externe au terminal 1 et au dispositif d'utilisation 11 : bibliothèque 20 d'un équipement 2 (non illustré) local au terminal 1 ou distant (c'est-à-dire accessible par le terminal 1 via un réseau de communication). Dans le cas d'une bibliothèque 20 dans un autre équipement, le terminal 1 comporte éventuellement un module d'accès 10b à la bibliothèque 20.

En particulier, le sélecteur de contenus 111 fournit le contenu sélectionné à un module d'utilisation tel qu'au moins un module de reproduction 12, notamment un écran, un projecteur, un haut-parleur..., ou un module de traitement de contenus 14.

En particulier, le dispositif d'utilisation 11 et/ou le terminal 1 comporte un module de détermination 112 de critères $\{cr_{ij}\}_{\substack{i=1..N \\ j=1..K_i}}$ en fonction du contenu c1 sélectionné par l'utilisateur U, en particulier le contenu c1 en cours d'utilisation. Notamment, le module de détermination récupère des caractéristiques du contenu c1 sélectionné, telles que des métadonnées, des données tatouées dans le contenu... et/ou analyse le contenu pour y récupérer une ou plusieurs caractéristiques. Le module de détermination 112 comporte, notamment :

- un module de reconnaissance, tel qu'un module de reconnaissance de visage, de texte, de monuments et/ou de paysage...,
- et/ou un analyseur de concept,
- et/ou un analyseur de topologie
- etc.

En particulier, le module de détermination 112 fournit au générateur de cluster 110 critères $\{cr_{ij}\}_{\substack{i=1..N \\ j=1..K_i}}$ en fonction d'au moins un contenu précédemment utilisé, tel qu'au moins le premier contenu c1 sélectionné.

En particulier, le dispositif d'utilisation 11 et/ou le terminal 1 comporte une base de données de cluster 114 dans laquelle sont enregistrés les clusters ainsi générés jusqu'à au moins la prochaine génération de clusters.

En particulier, le dispositif d'utilisation 11 et/ou le terminal 1 comporte un sélecteur de cluster 113 recevant les clusters $CL_1...CL_N$ générés par le générateur de clusters 110. Le sélecteur est notamment commandé cmd par l'utilisateur U au moyen de l'interface utilisateur 13. Ainsi, l'utilisateur U sélectionne un cluster parmi les clusters générés $CL_1...CL_N$ pour l'utiliser.

En particulier, cette commande de sélection de cluster est aussi reçue par le module de détermination de critères 112 permettant ainsi au générateur de cluster 110 de tenir compte de cette commande lors de la génération de nouveaux clusters.

En particulier, le dispositif d'utilisation 11 et/ou le terminal 1 comporte un module d'utilisation de cluster 115 apte à lire successivement et/ou simultanément les contenus d'un cluster de contenus. Le module d'utilisation de cluster 115 reçoit notamment le cluster sélectionné fourni par le sélecteur de cluster 113. Le module d'utilisation de cluster 115 fournit le contenu lu $CL_{n\_}c_m$ à un module d'utilisation, notamment l'un des modules d'utilisation de contenu 12 ou 14 suivant l'utilisation souhaitée. Dans un mode de réalisation non illustré, le module d'utilisation de cluster 115 comporte un module d'utilisation de contenu tel qu'un module de reproduction et/ou un module de traitement de contenus.

En particulier, le module d'utilisation de cluster 115 est apte à recevoir des actions $c_m\_act$ de l'utilisateur U relativement au contenu en cours d'utilisation $c_m$, notamment au moyen de l'interface utilisateur 13. Par exemple, les actions sont des actions sur la lecture des contenus, lecture, pause, avance rapide, retour au premier contenu du cluster..., lecture successive ou simultanée...

En particulier, ces actions sont reçues par le module de détermination de critères 112 permettant ainsi au générateur de cluster 110 de tenir compte de ces actions lors de la génération de nouveaux clusters.

En particulier, le module d'utilisation de clusters 115 est apte à commander le générateur de cluster 110 pour déclencher trg la génération de nouveaux clusters, notamment lorsque l'utilisation du cluster en cours est terminée, ou lorsque l'utilisateur U demande l'arrêt de l'utilisation du cluster en cours, par exemple au moyen d'une requête d'arrêt stp_req envoyée par l'interface utilisateur 13.

En particulier, le dispositif d'utilisation 11 et/ou le terminal 1 comporte une base de données de sauvegarde 116 dans laquelle sont sauvegardées l'ensemble des données utilisées par de critères 112. L'écriture dans la base de données de sauvegarde 116 est notamment commandée par une requête de fin d'utilisation provenant de l'interface utilisateur 13 mettant fin à l'utilisation en cours de la bibliothèque, et/ou par l'interruption de l'utilisation d'un cluster par le module d'utilisation de cluster 115.

En particulier, le générateur de clusters 110 et/ou le dispositif d'utilisation 11 et/ou le terminal 1 comporte un détecteur de lien 1101 détectant lors de la génération des clusters un lien entre un contenu d'un cluster et un contenu d'un autre cluster ($CL_{l1\_c_{\mu}1}$, $CL_{l2\_c_{\mu}2}$).

En particulier, le dispositif d'utilisation 11 et/ou le terminal 1 comporte un générateur de passerelle 117 apte à générer une passerelle entre deux contenus de deux clusters distincts. Cette passerelle est fournie directement au module d'utilisation de cluster 115 si le cluster a été sélectionné, et/ou enregistrée dans la base de données de clusters 114 et/ou la bibliothèque 10a, 20. En particulier, le générateur de passerelle 117 élabore une passerelle lors que le détecteur de lien 1101 fournit un lien entre deux clusters distincts ($CL_{l1\_c_{\mu}1}$, $CL_{l2\_c_{\mu}2}$).

Ainsi, le module d'utilisation de cluster 115 lisant le contenu lié d'un cluster pour le fournir au module d'utilisation de contenu 12, 14 indique à l'utilisateur la possibilité d'utiliser l'autre cluster lié par une passerelle au cluster en cours d'utilisation et lui permet de sélectionner cet autre cluster en commandant sa sélection au sélecteur de cluster 113 grâce, par exemple, à l'interface utilisateur 13.

En particulier, le dispositif d'utilisation 11 et/ou le terminal 1 comporte un module passerelle 118 connecté au module d'utilisation de cluster 115 et apte à commander le sélecteur de cluster 113 pour proposer la sélection du cluster lié $CL_{lnk}$ à l'utilisateur U. Par exemple, le module passerelle 118 détecte les contenus liés à un autre cluster lors de leur lecture par le module d'utilisation de cluster 115. Le module passerelle 118 recherche, notamment, l'autre cluster, lorsque soit le module passerelle 118, soit le module d'utilisation de clusters 115 détecte l'utilisation d'un contenu lié. Le module passerelle 118 recherche, par exemple, l'autre cluster dans les métadonnées du contenu lié, la bibliothèque 10a, 20 et/ou la base de données de clusters 114.

L'invention vise aussi un support. Le support d'informations peut être n'importe quelle entité ou dispositif capable de stocker le programme. Par exemple, le support peut comporter un moyen de stockage, tel qu'une ROM, par exemple un CD ROM ou une ROM de circuit microélectronique ou encore un moyen d'enregistrement magnétique, par exemple une disquette ou un disque dur.

D'autre part, le support d'informations peut être un support transmissible tel qu'un signal électrique ou optique qui peut être acheminé via un câble électrique ou optique, par radio ou par d'autres moyens. Le programme selon l'invention peut être en particulier téléchargé sur un réseau notamment de type Internet.

Alternativement, le support d'informations peut être un circuit intégré dans lequel le programme est incorporé, le circuit étant adapté pour exécuter ou pour être utilisé dans l'exécution du procédé en question.

Dans une autre implémentation, l'invention est mise en oeuvre au moyen de composants logiciels et/ou matériels. Dans cette optique le terme module peut correspondre aussi bien à un composant logiciel ou à un composant matériel. Un composant logiciel correspond à un ou plusieurs programmes d'ordinateur, un ou plusieurs sous-programmes d'un programme, ou de manière plus générale à tout élément d'un programme ou d'un logiciel apte à mettre en oeuvre une fonction ou un ensemble de fonction selon la description ci-dessus. Un composant matériel correspond à tout élément d'un ensemble matériel (ou hardware) apte à mettre en oeuvre une fonction ou un ensemble de fonctions.

**Revendications**

1. Procédé d'utilisation de contenus d'une bibliothèque de contenus comportant, suite à une utilisation d'au moins un contenu d'une bibliothèque, une génération de plusieurs clusters de contenus à partir des contenus de la bibliothèque en fonction d'un ou plusieurs critères associés aux clusters, les critères ayant été déterminés en fonction d'au moins un contenu précédemment utilisé, les clusters générés étant sélectionnables par un utilisateur, une sélection d'un cluster déclenchant une utilisation des contenus du cluster sélectionné.

2. Procédé d'utilisation de contenus selon la revendication précédente, **caractérisé en ce que** le procédé d'utilisation de contenus comporte une sélection d'un cluster sur commande de l'utilisateur parmi les suivants :

   • les clusters générés,
   • un autre cluster lié au cluster en cours d'utilisation au moyen d'une passerelle entre un contenu du cluster en cours d'utilisation et un contenu de cet autre cluster.

**3.** Procédé d'utilisation de contenus selon l'une quelconque des revendications précédentes, **caractérisé en ce que** le procédé d'utilisation de contenus comporte une utilisation d'un premier contenu sélectionné par l'utilisateur dans la bibliothèque, l'utilisation du premier contenu déclenchant la génération de clusters de contenus en fonction d'un ou plusieurs critères déterminés en fonction du premier contenu.

**4.** Procédé d'utilisation de contenus selon l'une quelconque des revendications précédentes, **caractérisé en ce que** le procédé d'utilisation de contenus comporte une utilisation des contenus d'un cluster sélectionné déclenchée par la sélection dudit cluster sur commande de l'utilisateur.

**5.** Procédé d'utilisation de contenus selon l'une quelconque des revendications précédentes, **caractérisé en ce que** le procédé d'utilisation de contenus comporte une utilisation des contenus d'un deuxième cluster sélectionné par l'utilisateur, la génération d'un deuxième cluster de contenus en fonction de critères déterminés en fonction d'au moins un contenu du premier cluster étant déclenchée par l'un des événements suivants :

  • l'utilisation du dernier contenu d'un premier cluster,
  • une requête de sortie de cluster de l'utilisateur.

**6.** Procédé d'utilisation de contenus selon l'une quelconque des revendications précédentes, **caractérisé en ce que** les critères sont déterminés en fonction d'au moins une information parmi les suivantes :

  • des informations relatives au premier contenu,
  • des informations relatives à des contenus d'un cluster précédemment utilisés,
  • des informations relatives à au moins une action de l'utilisateur relativement à au moins un contenu d'au moins un cluster précédemment utilisé,
  • des informations relatives à au moins une commande de sélection de cluster de l'utilisateur.

**7.** Procédé d'utilisation de contenus selon l'une quelconque des revendications précédentes, **caractérisé en ce que** les critères sont déterminés en fonction d'informations relatives à au moins une utilisation de contenus de la bibliothèque parmi les utilisations suivantes :

  • une utilisation en cours,
  • au moins une précédente utilisation, les critères étant fonction de données sauvegardées lors de la précédente utilisation.

**8.** Procédé d'utilisation de contenus selon l'une quelconque des revendications précédentes, **caractérisé en ce que** le procédé d'utilisation de contenus comporte une sauvegarde de données, les données sauvegardées comportant au moins une partie des informations relatives à des contenus utilisés, des critères, à des commandes de sélection de l'utilisation, et à des actions de l'utilisateur durant l'utilisation.

**9.** Procédé d'utilisation de contenus selon la revendication précédente, **caractérisé en ce que** le procédé d'utilisation comporte une détection de lien entre des caractéristiques de contenus de deux clusters, la détection d'un lien déclenchant une création d'une passerelle entre ces contenus de ces deux clusters.

**10.** Procédé d'utilisation de contenus selon la revendication précédente, **caractérisé en ce que** la détection de lien est effectuée lors de la génération de clusters.

**11.** Procédé d'utilisation de contenus selon l'une quelconque des revendications précédentes, **caractérisé en ce que** le procédé d'utilisation comporte une création de passerelle entre clusters, une passerelle étant établie entre un contenu d'un cluster et un contenu d'un autre cluster dès qu'un lien entre des caractéristiques du contenu du cluster et des caractéristiques du contenu de l'autre cluster est détecté.

**12.** Procédé d'utilisation de contenus selon l'une quelconque des revendications précédentes, **caractérisé en ce que** le procédé d'utilisation comporte une utilisation d'un contenu associé à une passerelle entre le contenu d'un cluster et un contenu d'un autre cluster déclenchant une proposition de sélection de l'autre cluster, la sélection de l'autre cluster permettant de déclencher une utilisation des contenus de cet autre cluster commençant par le contenu associé à la passerelle dans cet autre cluster.

**13.** Programme comprenant des instructions de code de programme pour l'exécution des étapes du procédé d'utilisation de contenu selon l'une quelconque des revendications précédentes lorsque ledit programme est exécuté par un processeur.

**14.** Dispositif d'utilisation de contenus d'une bibliothèque de contenus comportant un générateur de clusters, le générateur fournissant, suite à une utilisation d'au moins un contenu d'une bibliothèque, plusieurs clusters de contenus à partir des contenus de la bibliothèque en fonction d'un ou plusieurs critères associés aux clusters, les critères ayant été déterminés en fonction d'au moins un contenu précédemment utilisé, les clusters générés étant sélectionnables par un utilisateur, une sélection d'un cluster déclenchant une utilisation des contenus du cluster sélectionné.

**15.** Terminal comportant :

• Un module d'utilisation de contenus
• Un générateur de clusters fournissant, suite à une utilisation d'au moins un contenu d'une bibliothèque de contenus, plusieurs clusters de contenus à partir des contenus de la bibliothèque en fonction d'un ou plusieurs critères associés aux clusters, les critères ayant été déterminés en fonction d'au moins un contenu précédemment utilisé par le module d'utilisation, les clusters générés étant sélectionnables par un utilisateur, une sélection d'un cluster déclenchant une utilisation des contenus du cluster sélectionné.

**Fig. 1**

Fig. 2

Fig. 3a

Fig. 3b

Fig. 4

**Fig. 5**

# EP 3 032 440 A1

Europäisches
Patentamt

European
Patent Office

Office européen
des brevets

## RAPPORT DE RECHERCHE EUROPEENNE

Numéro de la demande

EP 15 19 8507

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| X | WO 2013/124468 A1 (RESEARCH IN MOTION LTD [CA]; FREYHULT MARIA CHRISTINA NATHALIE [SE]; K) 29 août 2013 (2013-08-29) * page 10, ligne 22 - page 12, ligne 7 * * page 28, ligne 14 - page 29, ligne 17 * ----- | 1-15 | INV. G06F17/30 |
| X | MEIERS T ET AL: "Hierarchical image database browsing environment with embedded relevance feedback", INTERNATIONAL CONFERENCE ON IMAGE PROCESSING (ICIP), IEEE, vol. 2, 22 septembre 2002 (2002-09-22), pages 593-596, XP010608041, ISBN: 978-0-7803-7622-9 * le document en entier * ----- | 1-15 | |
| X | WEI DAI ET AL: "Implicit Relevance Feedback for Content-Based Image Retrieval by Mining User Browsing Behaviors and Estimating Preference", LECTURE NOTES ON SOFTWARE ENGINEERING, 1 janvier 2013 (2013-01-01), pages 334-338, XP055222333, ISSN: 2301-3559, DOI: 10.7763/LNSE.2013.V1.72 * colonne de droite, alinéas 2,3 * ----- | 1-15 | DOMAINES TECHNIQUES RECHERCHES (IPC) G06F |
| X | US 8 352 465 B1 (JING YUSHI [US] ET AL) 8 janvier 2013 (2013-01-08) * colonne 4, ligne 10 - colonne 5, ligne 26 * * colonne 6, lignes 29-61 * * colonne 9, lignes 24-32 * ----- | 1-15 | |

Le présent rapport a été établi pour toutes les revendications

| Lieu de la recherche | Date d'achèvement de la recherche | Examinateur |
|---|---|---|
| La Haye | 30 mars 2016 | Correia Martins, F |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

EPO FORM 1503 03.82 (P04C02)

## ANNEXE AU RAPPORT DE RECHERCHE EUROPEENNE
## RELATIF A LA DEMANDE DE BREVET EUROPEEN NO.

EP 15 19 8507

La présente annexe indique les membres de la famille de brevets relatifs aux documents brevets cités dans le rapport de recherche européenne visé ci-dessus.
Lesdits members sont contenus au fichier informatique de l'Office européen des brevets à la date du
Les renseignements fournis sont donnés à titre indicatif et n'engagent pas la responsabilité de l'Office européen des brevets.

30-03-2016

| Document brevet cité au rapport de recherche | Date de publication | Membre(s) de la famille de brevet(s) | Date de publication |
|---|---|---|---|
| WO 2013124468 A1 | 29-08-2013 | CA 2865306 A1<br>WO 2013124468 A1 | 29-08-2013<br>29-08-2013 |
| US 8352465 B1 | 08-01-2013 | US 8352465 B1<br>US 8843478 B1<br>US 2015169635 A1 | 08-01-2013<br>23-09-2014<br>18-06-2015 |

EPO FORM P0460

Pour tout renseignement concernant cette annexe : voir Journal Officiel de l'Office européen des brevets, No.12/82